# FASCICULE DE BREVET EUROPEEN

(11) **EP 1 590 812 B1**
(45) Date de publication et mention de la délivrance du brevet: **23.06.2010**
(21) Numéro de dépôt: 04707564.3
(22) Date de dépôt: 03.02.2004
(51) Int. Cl.: G21C 5/00, G21C 7/16, G21C 7/22

(54) **REACTEUR NUCLEAIRE ET SES MOYENS D'INSERTION DE LIQUIDE NEUTROPHAGE DANS LE COEUR**
KERNREAKTOR MIT MITTEL ZUM EINBRINGEN VON NEUTRONENABSORBIERENDER FLÜSSIGKEIT IN DIE SPALTZONE
NUCLEAR REACTOR AND MEANS FOR INSERTING NEUTRON-ABSORBING LIQUID INTO THE CORE

(30) Priorité: 04.02.2003 FR 0301242; 06.05.2003 FR 0350147
(43) Date de publication de la demande: 02.11.2005
(73) Titulaire: Emin, Michel, 69130 Ecully (FR)
(72) Inventeur: Emin, Michel, 69130 Ecully (FR)
(74) Mandataire: Vuillermoz, Bruno
(86) Numéro de dépôt international: PCT/FR2004/050040
(87) Numéro de publication internationale: WO 2004/072984

(56) Documents cités:
- EP-A- 0 300 745
- DE-B- 1 125 562
- FR-A- 2 765 722
- US-A- 3 836 430
- US-A- 3 844 883
- US-A- 5 139 735
- US-A- 5 185 120

## Description

### Domaine de l'invention

L'invention concerne les réacteurs nucléaires, et en particulier les moyens d'insertion de neutrophage, tel que du liquide neutrophage, quand celui-ci est utilisé, pour contrôler et moduler la puissance instantanée d'un réacteur nucléaire. Plus précisément, elle permet d'assurer l'arrêt d'urgence de ce dernier, de moduler le flux de neutrons mis en oeuvre pour moduler la puissance nucléaire sans déformation majeure du coeur, de régénérer le combustible nucléaire en fonctionnement, puis d'utiliser ce combustible régénéré sans déchargement de celui-ci.

L'invention s'applique à tous les types de réacteurs nucléaires, qu'ils soient à eau pressurisée, à eau bouillante, à caloporteur gazeux, à métaux fondus, ou même à eau lourde.

### Art antérieur et problème posé

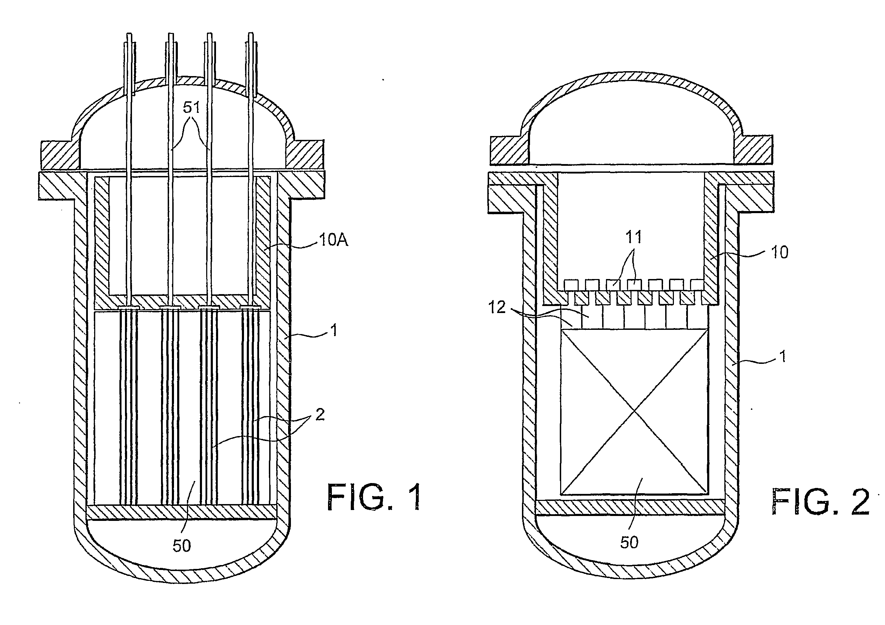

La figure 1 montre, en coupe verticale, un premier type de réacteur nucléaire du type à eau pressurisée de l'art antérieur. La référence 1 désigne, comme dans les autres figures, la cuve du réacteur, tandis que la référence 2 désigne les barres de combustible qui constituent l'ensemble appelé coeur 50. On remarque qu'une pièce interne de maintien du coeur appelée, dans la suite de la demande de brevet, pièce interne ou ensemble interne et référencé 10A. Elle est placée au-dessus du coeur 50 contenant le combustible 2 et maintient celui-ci en place, dans la partie inférieure de la cuve 1, afin que celui-ci ne remonte pas sous l'effet du flux très important d'eau passant à travers le coeur dans un mouvement ascendant. Cette pièce interne ou ensemble interne 10 a donc une fonction mécanique.

Un tel réacteur est par exemple décrit dans le document EP-0 300 745.

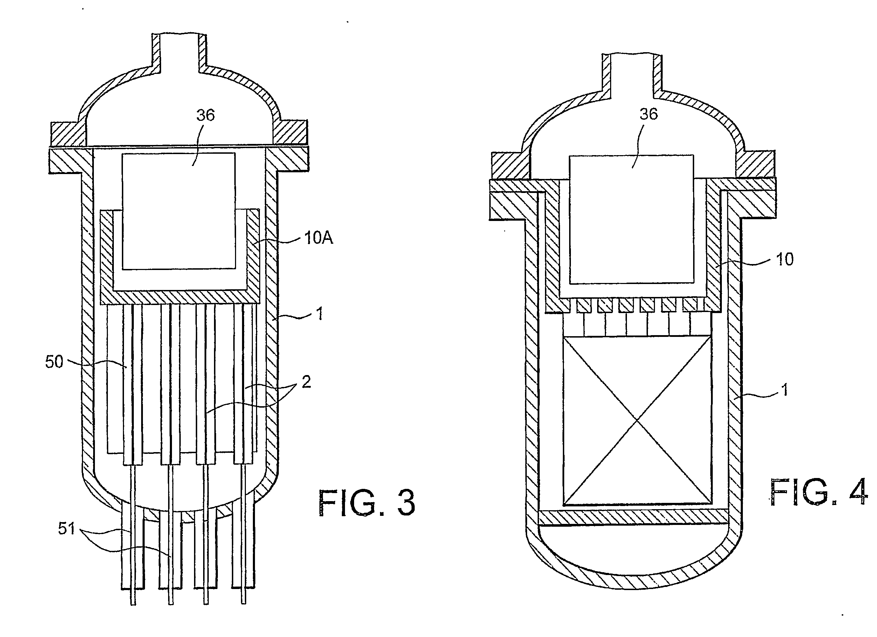

La figure 3 montre un réacteur du type à eau bouillante selon l'art antérieur. Là encore, le coeur 50 comprenant le combustible 2 est placé en dessous de la pièce interne 10A à l'intérieur de la cuve 1. Par contre, des sécheurs de vapeur 36 sont placés au-dessus de la pièce interne 10A.

On remarque que dans les réacteurs de l'art antérieur, les pièces internes 10A ou ensemble interne ne sont pas en contact avec l'extérieur de la cuve 2.

Dans ces deux types de réacteurs nucléaires, comme dans d'autres types, on utilise des barres de commande rigides 51 qui sont actionnées à partir de l'extérieur de la cuve 2. Dans le cas du réacteur à eau pressurisée représenté à la figure 1, les barres de commande 51 traversent la cuve 2 par le couvercle supérieur et traversent la pièce interne 10A. Leurs systèmes de guidage et de commande encombrent, entre autres, la partie supérieure du couvercle de la cuve 1. Dans le cas du réacteur à eau bouillante représenté à la figure 3, les barres de commande 51 pénètrent dans la cuve par sa base et leurs systèmes de guidage et de commande sont placés sous celle-ci.

En complément, il est également commun d'utiliser dans les réacteurs du type pressurisé, un absorbant neutronique, à savoir de l'acide borique, dissout dans le flux caloporteur pour faire varier la réactivité de façon homogène. D'autre part, on utilise la variation de la vitesse des pompes, pour faire varier, dans une moindre part, la réactivité dans les réacteurs nucléaires du type à eau bouillante.

On constate donc que l'installation nécessaire pour la commande et la régulation du fonctionnement du coeur du réacteur nécessite un grand encombrement de par l'utilisation des barres de contrôle, soit au-dessus ou en dessous du coeur, et traversant la cuve et mobilise des moyens complémentaires lourds chimiques ou mécaniques.

Un but principal de l'invention est donc de remédier à cet inconvénient en proposant un mode différent de commande de la réaction nucléaire à l'intérieur du coeur du réacteur.

### Résumé de l'invention

A cet effet, l'objet principal de l'invention est un réacteur nucléaire selon la revendication 1.

Selon l'invention, la au moins une pièce interne débouche à l'extérieur de la cuve pour relier des dispositifs de commande externes à la cuve du réacteur aux moyens d'insertion placés à l'intérieur de la cuve. Elle débouche de préférence latéralement, mais pourrait déboucher ailleurs sur la cuve du réacteur. Les moyens d'insertion comprennent des éléments de transmission placés en partie dans des canalisations prévues dans la pièce interne et débouchant d'une part à l'extérieur de la cuve et étant reliées d'autre part aux moyens d'insertion de liquide neutrophage.

De préférence, la au moins une pièce interne est placée au-dessus du coeur et débouche latéralement à l'extérieur de la cuve.

Selon une réalisation préférentielle de l'invention, ces moyens d'insertion de liquide neutrophage sont des moyens d'injection et de distribution de liquide neutrophage dans des canaux d'injection placés à l'intérieur des assemblages de crayons de combustible.

On prévoit de placer dans la au moins une pièce interne un réservoir d'hélium faisant partie des moyens de transmission.

Dans une première réalisation de l'invention, la au moins une pièce interne est située au-dessus du coeur et constitué par une pièce interne supérieure débouchant à l'extérieur de la cuve d'une pièce interne inférieure placée au-dessous d'elle, à l'intérieur de la cuve.

Dans une deuxième réalisation de l'invention, la pièce interne est constitué d'une seule pièce débouchant latéralement à l'extérieur.

Pour compléter avantageusement cette disposition, le réacteur nucléaire selon l'invention se complète d'au moins un bras de connexion relié à une sortie latérale de connexion de la au moins une pièce interne avec les dispositif de commande externes, le bras de connexion étant articulé pour pouvoir prendre deux positions qui sont :
- une position dépliée de connexion dans laquelle une première extrémité du bras de connexion débouche en dehors d'une piscine dans laquelle se trouve immergé le réacteur, et
- une position repliée dans laquelle le bras se trouve à l'intérieur de la au moins une pièce interne, des éléments de transmission se trouvant à l'intérieur du bras de connexion. Ceci permet aux tubes et autres câbles constituant les éléments de transmission se trouvant à l'intérieur du bras de ne pas avoir de connexion entre la au moins une pièce interne et l'extérieur de la piscine.

Dans la réalisation préférentielle du circuit d'injection du liquide neutrophage, celui-ci comprend au moins un réservoir de liquide neutrophage placé dans ou dessous la pièce interne.

De plus, il est avantageux d'utiliser une tête d'assemblage réalisant la liaison entre la au moins une pièce interne et les canaux d'injection du liquide neutrophage placée en dessous de la pièce interne, une partie supérieure pénétrant ou traversant éventuellement dans la pièce interne.

Des canalisations de liquide neutrophage terminées chacune d'un col de cygne pénètrent dans les réservoirs et complètent avantageusement la tête d'assemblage.

Dans le but de réaliser des connexions entre les canalisations placées dans la pièce interne et les moyens d'injection du liquide neutrophage, on utilise avantageusement une pièce mobile de connexion placée au-dessus de la pièce interne, les canalisations de la pièce interne débouchant également sur le dessus de la pièce interne, la pièce mobile de connexion comprenant un espace débouchant au-dessus des canalisations de la pièce interne, et on utilise des canalisations mettant en liaison les canalisations de la pièce interne avec les réservoirs de liquide neutrophage des moyens d'injection commandés par des moyens de commande placés à l'extérieur de la cuve.

Dans ce cas, il est avantageux d'utiliser une cloche mobile placée dans la pièce mobile de connexion, au-dessus de l'endroit où débouchent les canalisations de la pièce interne et étant complétée de joints d'étanchéité permet de connecter de façon parfaitement étanche les différents ensembles dans le réacteur.

Plusieurs réalisations des canaux d'injection sont possibles. En effet, une première réalisation consiste à utiliser pour chacun d'eux un tube externe à l'intérieur duquel est placé au moins un tube capillaire.

Dans le but de compenser des effets particuliers de la réactivité du réacteur selon la hauteur dans le coeur, le tube externe peut présenter avantageusement une section variable sur la hauteur de celui-ci, de préférence dans le haut du tube externe.

En plaçant plusieurs tubes capillaires en parallèle on obtient une injection très rapide du neutrophage. Cette disposition particulière permet de réaliser un système d'arrêt d'urgence compatible avec les exigences d'un réacteur nucléaire.

Une autre réalisation consiste à compléter cet ensemble avec une cloche dont le but est de faire varier le spectre neutronique. On peut disposer cette cloche autour d'un tube externe et son ou ses tubes capillaires. Cette dernière réalisation permet avantageusement de réaliser la variation du spectre neutronique dans le coeur du réacteur en remplissant ou en vidant à volonté cette cloche ouverte sur le fluide du réacteur à l'aide de gaz véhiculé par les canalisations des internes. Le fait de faire varier le spectre neutronique permet également de modifier des noyaux de certains matériaux radioactifs irradiés, tels que des déchets à vie longue pour les rendre plus utilisables et susceptibles d'être stockés.

En ce qui concerne le circuit de distribution pneumatique, le chargement d'un réacteur étant réalisé sous eau, la pièce mobile de connexion est complétée d'opercules à la base de la cloche mobile pour réaliser l'étanchéité de cette pièce avant la connexion avec les canalisations de la pièce interne, les canalisations de la tête d'assemblage et une canalisation de la pièce mobile de connexion.

Les opercules sont perforées lors du serrage de la pièce mobile de connexion sur la tête d'assemblage.

Dans la réalisation préférentielle de l'invention, les conduits d'injection et de distribution du neutrophage entre les réservoirs et les canaux d'injection situés dans les assemblages de combustibles sont placés dans la tête d'assemblage, sur plusieurs étages respectifs en fonction du type de fonction devant être réalisée par l'injection du neutrophage dans les canaux choisis.

En ce qui concerne le circuit de distribution électrique, pour être étanche avant la connexion sur la pièce interne, la pièce mobile de connexion est complétée d'opercules à la base de la cloche mobile dans laquelle est placée une pièce de raccord montée légèrement mobile de façon étanche grâce à un joint et pouvant recevoir un clapet à bille terminant un câble aboutissant de la pièce interne dans l'espace de la pièce mobile de connexion.

On a alors réalisé un système de connexions électriques ou optiques connectable sous eau et apte à fonctionner dans un milieu liquide sous très haute pression.

Dans une variante selon l'invention, les canalisations dans la pièce interne peuvent être connectées à des pistons manoeuvrant des barres de commande rigides.

Dans une autre variante selon l'invention, cette pièce interne peut être équipée de conducteurs électriques pour manoeuvrer des dispositifs électromagnétiques ou électriques qui sont reliés là aussi à des barres de commande rigides.

Les pièces mobiles de connexion peuvent, par leurs formes complémentaires s'autobloquer.

Enfin, leurs trous d'eau peuvent présenter un profil en partie hélicoïdal pour engendrer une mise en rotation du fluide du réacteur pour homogénéiser la température du fluide sortant.

### Liste des figures

L'invention et ses différentes caractéristiques techniques seront mieux comprises à la lecture de la description suivante, suivie de plusieurs figures représentant respectivement:
- figure 1, en coupe frontale, un réacteur nucléaire à eau pressurisée selon l'art antérieur ;
- figure 2, en coupe frontale, un réacteur à eau pressurisée selon l'invention ;
- figure 3, en coupe frontale, un réacteur à eau bouillante selon l'art antérieur ;
- figure 4, en coupe frontale, un réacteur à eau bouillante selon l'invention ;
- figure 5A et 5B, des schémas théoriques d'installations de réacteur nucléaire selon l'invention ;
- figure 6A, une vue de dessus de la pièce mobile de connexion, selon l'invention;
- figure 6B, une coupe selon la ligne 6B-6B de la figure 6A ;
- figure 6C, une coupe frontale selon la ligne 6C-6C de la figure 6A ;
- figure 7A, une vue de dessus d'une deuxième réalisation de la pièce mobile de connexion, selon l'invention ;
- figure 7B, une coupe selon la ligne 7B-7B de la figure 7A ;
- figure 8, en coupe frontale, une première réalisation d'un canal d'injection ;
- figure 9, en coupe frontale, une deuxième réalisation d'un canal d'injection du réacteur selon l'invention ;
- figures 9A, 9B, 9C et 9D, deux formes utilisées dans la deuxième réalisation du canal d'injection selon l'invention de la figure 9 ;
- figure 10A, en coupe, une troisième réalisation d'un canal d'injection selon la présente invention ;
- figure 10B, une application des réalisations illustrées aux figures 8, 9 et 10A ;
- figure 11, en coupe, un détail de réalisation de la pièce mobile de connexion du réacteur selon l'invention ;
- figure 12, en coupe, un autre détail de réalisation de la pièce mobile de connexion du réacteur selon l'invention ;
- figure 13, une forme particulière des pièces mobiles de connexion ;
- figure 14, en coupe frontale, une variante de réalisation du réacteur selon l'invention ; et
- figure 15, un complément du réacteur selon l'invention.

### Description détaillée de plusieurs réalisations de l'invention

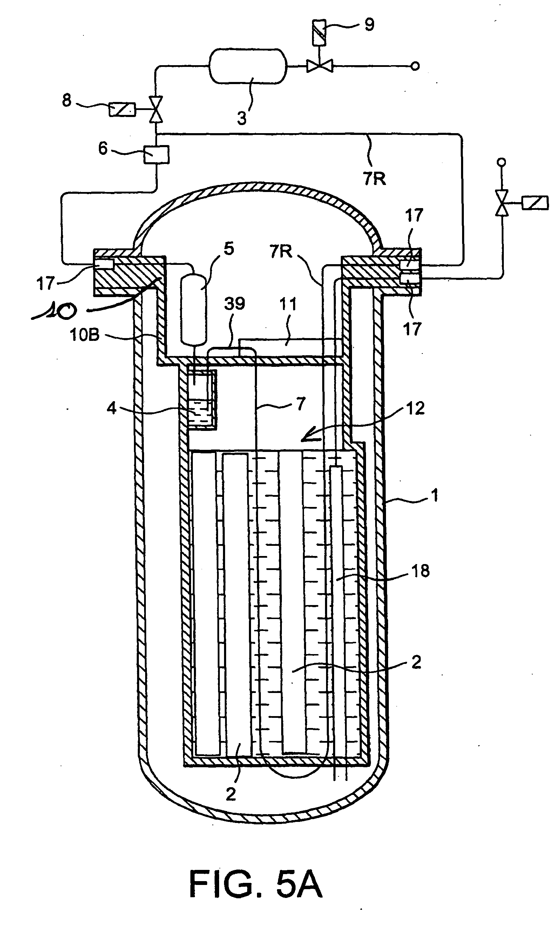

La figure 5A est un schéma de principe de fonctionnement du réacteur selon l'invention dans le cas où les moyens d'insertion de neutrophage sont des moyens d'injection et de distribution de liquide neutrophage et appliqué à assemblage de crayons de combustible.

On a représenté schématiquement une cuve 1 de réacteur nucléaire renfermant un coeur 50 comprenant lui-même une grande série de barres de combustible 2. Le contrôle de la réactivité dans le coeur 50 est obtenu par un liquide neutrophage injecté dans des canaux 7 positionnés de façon permanente entre les crayons de combustible 2 par des canaux d'injection 7. Au-dessus du coeur 50 se trouvent un ou plusieurs réservoirs de liquide neutrophage 4 d'où partent les canaux d'injection 7. Le tout est placé sous la pièce interne 10 (ou l'ensemble interne si elle est réalisée en plusieurs parties) qui est utilisée dans chaque réacteur nucléaire pour maintenir le coeur 50 en place, c'est-à-dire dans la partie inférieure de la cuve 1.

Cette figure 5A met en valeur une partie des moyens de transmission, c'est-à-dire le système d'alimentation en gaz et plus particulièrement en hélium, permettant le déplacement du liquide neutrophage. En effet, dans la pièce interne 10 ou son équivalent, se trouve au moins un réservoir d'hélium 5 (représenté ici à l'extérieur). Son remplissage et sa vidange sont commandés par une électrovanne de distribution 8 complétée d'un diaphragme de perte de charge 6. Une canalisation de retour 7R, en provenance de la base de chaque canal d'injection 7 et aboutissant en amont du diaphragme 6, permet, avec ce dernier, de créer une différence de pression entre les deux branches du canal d'injection 7 du liquide neutrophage. Cette installation est complétée en amont d'un réservoir de décharge 3 piloté par une électrovanne de pressurisation 9.

On remarque que la pièce interne 10 ou son équivalent débouche latéralement à l'extérieur de la cuve 1 et possède, à ce niveau, des connecteurs latéraux 17. Elle pourrait déboucher ailleurs, par exemple sur le fond de la cuve, avec d'autres pièces internes de liaison.

Ainsi, les différentes canalisations, circuits de commande et d'alimentation des moyens d'insertion de neutrophage, notamment l'alimentation en hélium, peuvent être raccordés sur cette pièce interne 10 à l'extérieur de la cuve avec les moyens de commande extérieurs à la cuve 1. Ainsi, tous les moyens de régulation de la puissance nucléaire du réacteur passent par cette pièce interne, sans traverser la cuve ou le couvercle de cuve, comme c'est justement le cas pour les barres de contrôle utilisées dans les réacteurs nucléaires de conception habituelle. Cela limite ainsi le risque de fuite car les conduits véhiculant les fluides pneumatiques, hydrauliques, les conducteurs électriques ou optiques, sont intégrés dans la masse de cette pièce 10.

Les figures 2 et 4 montrent, en comparaison respective avec les figures 1 et 3, les changements, améliorations et avantages potentiels que procure le dispositif selon l'invention. En effet, la pièce interne 10 débouchant à l'extérieur de la cuve permet la commande complète du coeur 50 du réacteur. Ainsi, l'espace supérieur à l'intérieur de la cuve 1 est libéré pour le réacteur à eau pressurisée de la figure 2 et l'espace sous la cuve 1 du réacteur à eau bouillante de la figure 3 est également libéré.

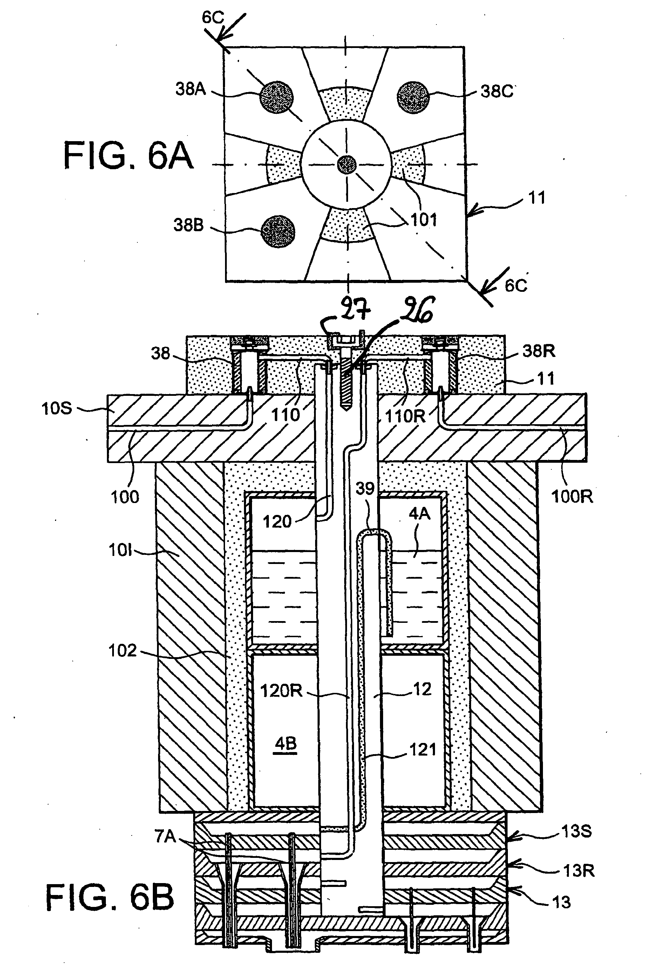

En effet, en se reportant aux figures 6A et 6B, on constate que la pièce mobile de connexion 11 est placée au-dessus de la pièce interne qui est réalisée ici en deux parties. Une première partie supérieure 10S et une deuxième partie inférieure 10I. La première partie supérieure 10S comprend les conduits ou canalisations 100 permettant l'approvisionnement en énergie des moyens de d'insertion de neutrophage. La deuxième qui est la partie inférieure 10I correspond géographiquement et fonctionnellement à la pièce interne 10A (figures 1 et 3) traditionnelle qui est fixée sur la cuve 1. Elle permet aussi la fonction de logement de certains équipements des moyens de stockage, à savoir des réservoirs 4 de liquide neutrophage, par exemple un réservoir supérieur 4A et un réservoir inférieur 4B.

La figure 6B, en coupe, montre une canalisation 100 placée à l'intérieur de la pièce interne supérieure 10S. Elle débouche dans une cavité 38A de la pièce mobile de connexion 11, autour d'une cloche de connexion 38. En fait, la pièce mobile de connexion 11 est placée au-dessus de la pièce interne 10, 10A ou l'ensemble équivalent, de manière à pouvoir être démontée relativement facilement, pour son entretien ou pour changer des joints ou des organes de connexion. Elle y est fixée au moyen de vis 26 et d'un arrêt en rotation constitué, par exemple, par une rondelle rabattable 27. La pièce mobile de connexion 11 possède elle-même une canalisation 110 joignant l'intérieur de la cloche de connexion 38 avec la partie supérieure de la tête d'assemblage 12 possédant elle-même des canalisations 120 débouchant sur les réservoirs de liquide neutrophage 4A et 4B.

Ces différentes canalisations 100, 110 et 120 sont relatives à la distribution du gaz pour pousser le liquide neutrophage dans le coeur du réacteur. Il faut prendre en considération que d'autres réseaux de distribution sont installés dans la ou les pièces internes et la pièce mobile de connexion 11. On utilise cette même pièce interne supérieure 10S pour passer des câbles électriques, dans le but de ramener, à l'extérieur, des informations de capteurs ou de moyens de contrôle situés dans le réacteur. Il peut s'agir entre autres de réseaux électriques ou optiques de contrôle ou de commande, et de toutes les autres canalisations nécessaires à la circulation de fluide ou d'éléments de transmission de signaux.

La figure 6A montre une vue de dessus de la pièce mobile de connexion 11, et notamment sa cavité 38A.

On peut constater que d'autres cavités 38B et 38C ont été représentées sur cette figure 6A. Elles correspondent à des espaces de communication entre différentes canalisations permettant la liaison, soit de conducteurs électriques, soit de canalisations hydrauliques, pneumatiques ou autres ou concernant d'autres organes de commande ou de contrôle du coeur du réacteur.

La partie inférieure de la tête d'assemblage possède plusieurs étages 13. On constate que l'étage supérieur 13S reçoit à l'arrivée d'une canalisation de liquide neutrophage 121, provenant d'un réservoir de liquide neutrophage 4A placé dans une partie interne inférieure 10I. Des cols de cygnes 39 sont utilisés sur les canaux d'injection 7 dans le but d'empêcher des injections intempestives du liquide neutrophage. On comprend aisément que, avec un circuit de commande pneumatique aboutissant dans un réservoir de liquide neutrophage 4A, on puisse injecter, dans des premiers canaux d'injection 7A débouchant dans l'étage supérieure 13S, une certaine quantité de liquide neutrophage destinée à obtenir un résultat désiré sur la modération de la puissance de fonctionnement du coeur du réacteur.

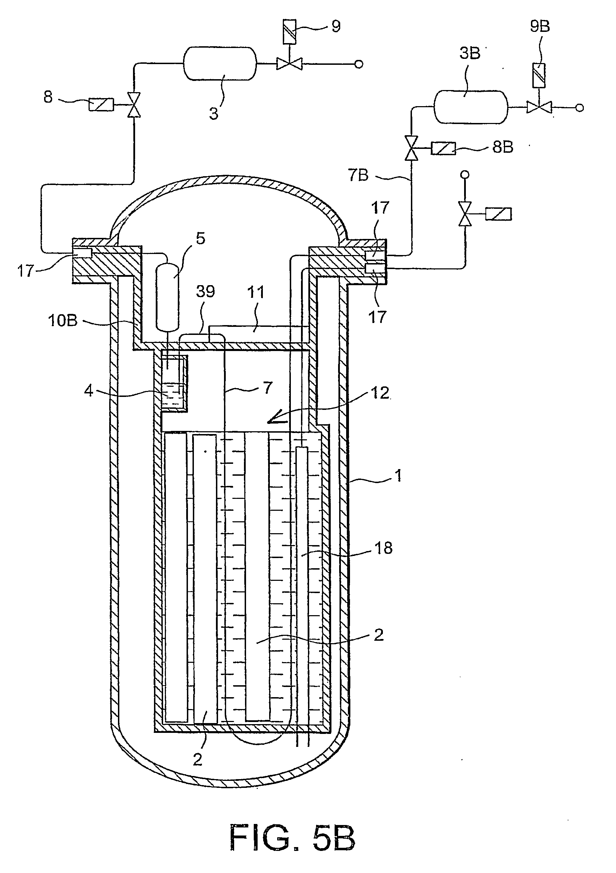

En disposant ainsi de plusieurs étages 13 et 13S, on peut prévoir plusieurs circuits d'alimentation en liquide neutrophage, commandés différemment et indépendamment les uns des autres par des canalisations différentes. Il est ainsi possible, en utilisant des circuits différents, de moduler la puissance de fonctionnement du coeur, de procéder à un arrêt d'urgence ou d'agir sur la répartition géographique de la réaction de fission à l'intérieur du coeur (offset), c'est-à-dire une répartition axiale verticale de l'activité nucléaire dans le coeur. Pour ce faire on utilise un dispositif similaire à celui décrit par la figure 5B dans lequel on a supprimé le diaphragme et séparé 1a partie 7 et la partie 7R. Sur chacune de ces branches on a alors une vanne 8 un réservoir 3 et une vanne de régulation 9 qui permettent de régler la hauteur de neutrophage dans le canal d'injection 7.

La deuxième ligne de commande de pression est matérialisée par une canalisation de retour 120R en communication avec la deuxième extrémité des canaux d'injection par un étage de retour 13R se prolongeant par une canalisation 110R et une cloche mobile 38R de la pièce mobile de connexion 11 et une canalisation 100R de la pièce interne 10S.

Un passage d'eau 102 est prévu autour des réservoirs de liquide neutrophage 4A et 4B. Parallèlement, des ouies 101 sont prévues dans la pièce mobile de connexion 11 (voir figure 6A). Ces dernières et le volume d'eau 102 représentent le passage de l'eau à travers ces éléments de commande et les pièces internes 10S et 10I. En effet, il est nécessaire de garder à l'esprit qu'un flux très important de liquide traverse le coeur d'un réacteur et doit passer dans la partie supérieure de la cuve, c'est-à-dire traverser la ou les pièces internes 10, 10I et 10S.

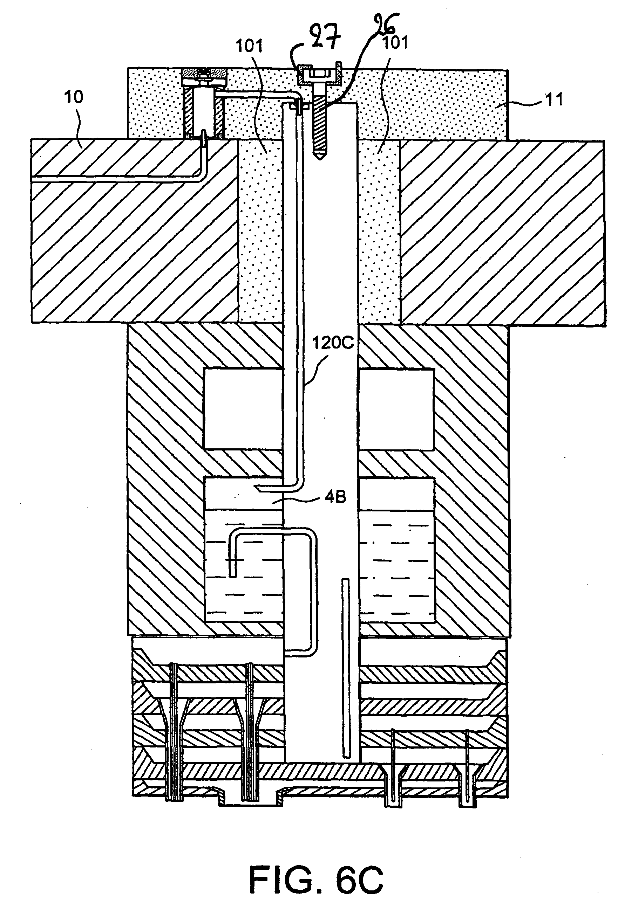

La figure 6C représente l'ensemble selon une autre coupe selon la ligne 6C-6C de la figure 6A. Ainsi, il est possible de voir, entre autres, les ouies 101 dans la pièce interne 10 et une canalisation 120C aboutissant dans le réservoir de liquide neutrophage inférieur 4B.

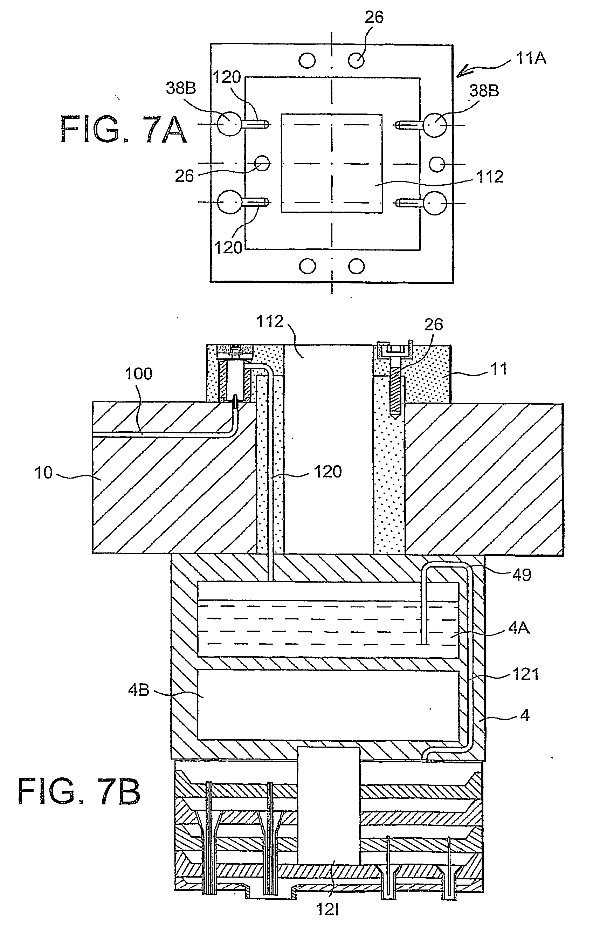

Les figures 7A et 7B représentent une autre réalisation des éléments qui viennent d'être décrits parallèlement aux figures 6A et 6B. Sur cette réalisation, l'ensemble interne formé des deux pièces internes inférieure 10I et supérieure 10S est remplacé par une unique pièce 10, dont la forme peut s'apparenter à celle des pièces existant déjà. La connexion par une canalisation 100, la pièce mobile de connexion 11 est analogue. Cette dernière est toujours placée sur la surface supérieure de la pièce interne 10 au moyen de vis 26. Par contre, un passage central 112 permet à l'eau de circuler.

En dessous de la pièce interne 10 se trouve une pièce réservoir 4 contenant deux réservoirs de liquide neutrophage 4A et 4B. Dans cette réalisation, le fonctionnement est similaire. En d'autres termes, la pression arrive dans les réservoirs de liquide neutrophage 4A et 4B par l'intermédiaire de la canalisation 120 d'une partie supérieure de la tête d'assemblage 12S. Le liquide neutrophage descend dans un ou plusieurs étages 13 d'une partie inférieure 12I de la tête d'assemblage au moyen d'un col de cygne 39 prolongé de la canalisation d'alimentation 121.

La figure 7A montre la circulation de l'eau à travers la pièce module de connexion 11A, c'est-à-dire par la canalisation centrale 112. Les vis 26 ont été également représentées sur cette figure, de même que les espaces 39B de la pièce mobile de connexion 11A et le début des canalisations 120.

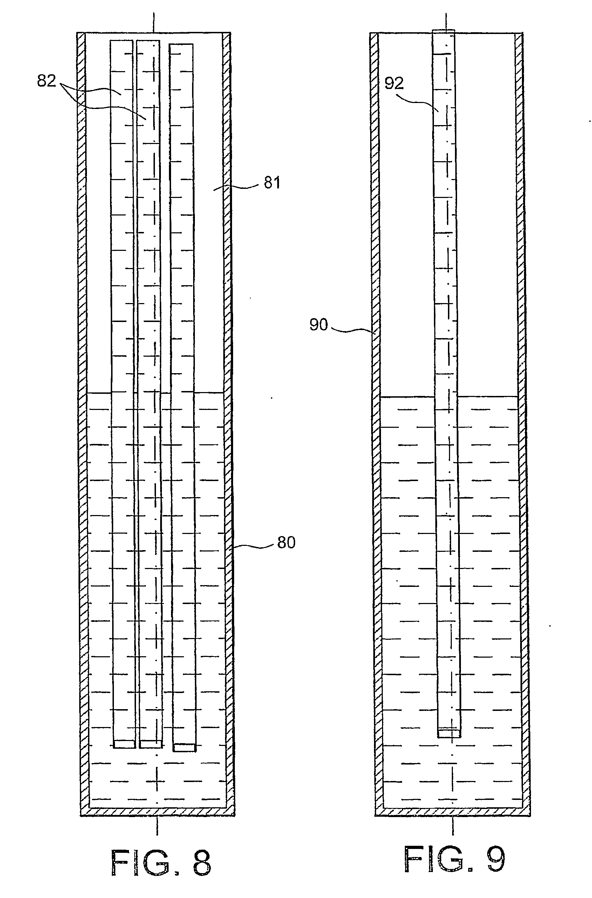

En référence à la figure 8, une première réalisation des canaux d'injection est prévue pour procéder aux arrêts d'urgence du réacteur. La rapidité de l'injection du liquide neutrophage y ait donc privilégiée. Pour atteindre cette injection rapide, on utilise un tube externe 80 à l'intérieur duquel sont placés plusieurs tubes capillaires 82, l'espace 81 subsistant permet de provoquer l'injection rapide du liquide neutrophage dans cet ensemble par variation de pression, au moyen de l'hélium qui agit sur les réservoirs de liquide neutrophage. Lors d'une commande d'arrêt d'urgence du réacteur, tous les tubes capillaires 82, montés en parallèle, sont alimentés en liquide neutrophage qui pénètre rapidement dans l'ensemble du tube externe 80.

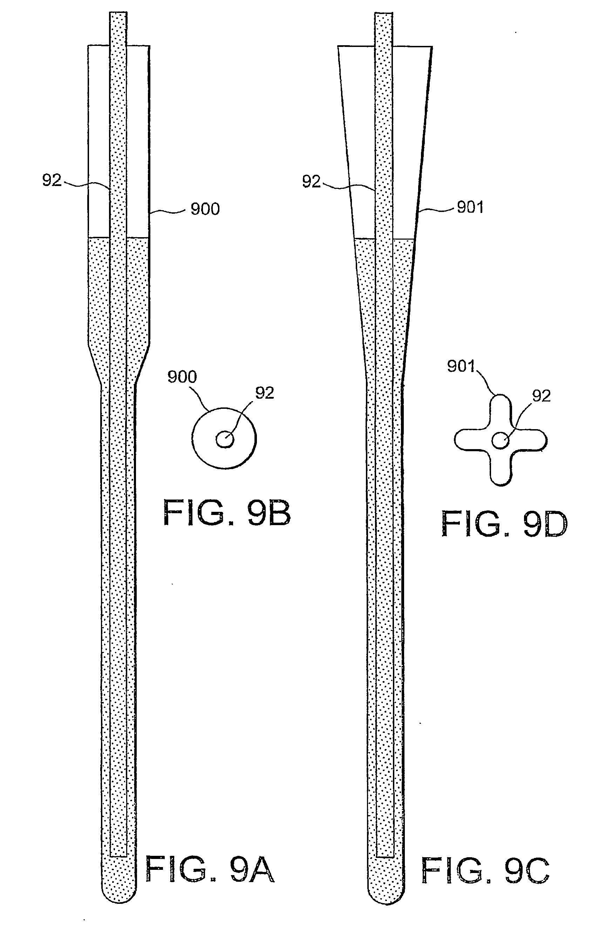

La figure 9 montre un sous-ensemble utilisé pour procéder à la régulation de la puissance du coeur du réacteur. Le tube externe 90 ne contient qu'un seul tube capillaire 92. Ceci s'explique par la non-nécessité d'obtenir rapidement une grande quantité de liquide neutrophage. Toutefois, ce canal peut être utilisé pour les autres fonctions que l'arrêt d'urgence.

En référence aux figures 9A, 9B, 9C et 9D, il est intéressant de pouvoir donner au tube externe référencé 90 sur la figure 9 une forme ayant une section variable sur sa hauteur. En effet, sur la figure 9A, le tube externe 900 possède une section plus importante dans sa partie supérieure. La figure 9B montre que cette forme peut être cylindrique, le tube capillaire 92 restant inchangé. Ceci permet de pouvoir accumuler une quantité plus importante de liquide neutrophage dans la partie supérieure de la partie fonctionnelle du coeur du réacteur, afin d'influer de manière plus significative sur la réactivité de ce dernier.

Les figures 9C et 9D montrent une deuxième forme possible du tube externe 901 dont la section varie de façon constante à partir d'une certaine hauteur et prend une forme évasée dans sa coupe frontale. La figure 9D montre que la section peut alors affecter une forme en croix.

On peut noter que d'autres formes de tubes externes peuvent être envisagées. Un enroulement du tube sur lui-même peut avoir le même avantage.

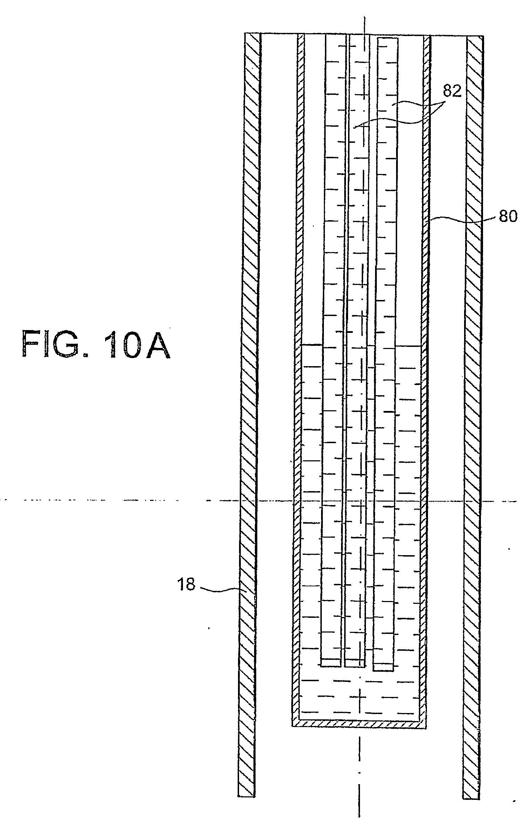

La figure 10A montre un ensemble destiné à la modération du flux à l'intérieur même du coeur du réacteur. L'ensemble de la figure 8 comprenant le tube externe 80 et les canaux d'injection 82 est complété d'une cloche de variation spectrale 18 entourant l'ensemble. Lorsque la cloche de pression 18 est vide, le spectre neutronique permet de régénérer le combustible. Lorsque la cloche de pression 18 est remplie par le fluide caloporteur, on obtient une modération accrue du flux qui permet de consommer le combustible du réacteur. Ces changements de flux neutronique à l'intérieur du réacteur peuvent aussi être utilisés comme moyens de variation de la réactivité.

De préférence, la cloche de variation spectrale 18 est constituée d'un tube en zirconium ou en tout autre matériau transparent vis-à-vis des neutrons. Lorsqu'elle est remplie d'un liquide modérateur, par exemple l'eau du réacteur, elle a le même pouvoir modérateur vis-à-vis des neutrons que l'eau en circulation en dehors de ce tube. Quant elle est remplie d'hélium, ou de tout autre gaz ou liquide n'ayant qu'un effet vis-à-vis des neutrons, la cloche de variation spectrale 18 créée un effet de vide qui ne ralentit pas les neutrons et, de ce fait, les neutrons émis par les crayons combustible peuvent recréer un atome fissile, par exemple de plutonium, par bombardement d'un noyau fissile qui peut être, par exemple, de l'uranium, du plutonium, du thorium.

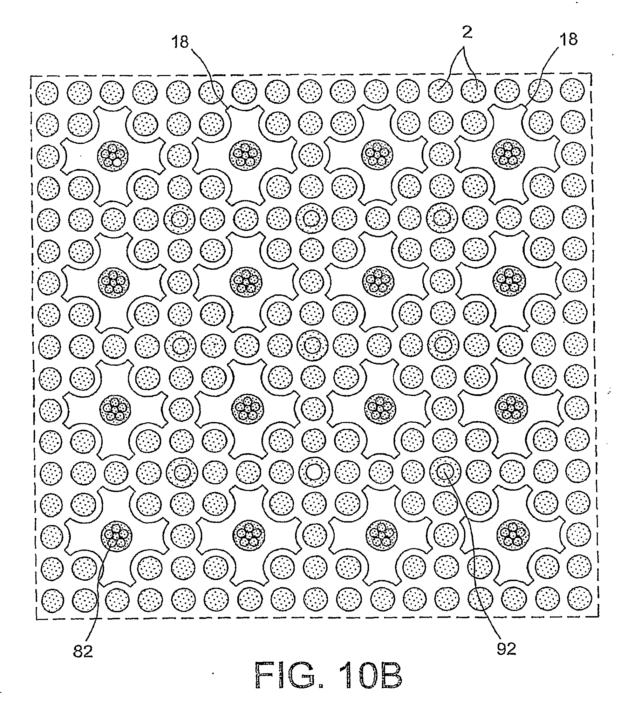

La figure 10B permet de montrer comment sont utilisés les différents canaux d'injection des figures 8, 9 et 10A, ainsi que la cloche 18 de cette dernière. En effet, cette coupe horizontale montre le faisceau du coeur du réacteur. Les tubes capillaires 82 qui sont groupés chacun au milieu d'une cloche 18, constituent des tubes d'injection d'arrêt rapide ou d'urgence. En effet, ils peuvent apporter une plus grande quantité d'hélium en un temps donné. Les tubes capillaires 92 qui sont placés au milieu de faisceaux de barres de combustible 2 sont prévus pour la régulation de la réactivité du réacteur. La cloche 18 affecte une forme en croix dont les extrémités et l'intérieur des bras peuvent avoir une forme concave pour épouser la forme cylindrique des barres de combustible 2.

On signale que, dans le cadre de la production d'électricité, les barres de combustible sont donc consommées sur une durée déterminée. Dans un autre mode d'utilisation d'un réacteur nucléaire, on peut placer des barres de matériau radioactif modifiées, telles que combustibles usagés (on pense en particulier à l'américium, au neptunium et au curium). En effet, de tels matériaux peuvent devenir moins radioactifs, suite à leur passage dans un réacteur nucléaire de ce type, la transmutation de ces éléments permettant même de détruire de tels déchets à vie longue. En d'autres termes, une utilisation particulière d'un réacteur nucléaire de ce type est l'incinération de déchets radioactifs à vie longue.

Ce type de cloche de variation spectrale offre la possibilité de piloter à l'aide de la pression de gaz dans les tubes, le rapport entre le volume occupé par le milieu modérant les neutrons dans un volume de cuve constant et le volume occupé par du combustible. Ce rapport est appelé " taux de vide ".

Cet effet de vide agit aussi sur l'effet de modération et de ce même effet de modération modifie la puissance du réacteur. On peut donc aussi modifier la puissance du réacteur en modifiant le taux de vide dans celui-ci.

Le fonctionnement de la pression à l'intérieur des canaux peut être géré de façon binaire, c'est-à-dire en tout ou rien, ou être utilisé pour compenser les déformations de flux appelées " axial off set ". Le principe reste le même, mais on règle le niveau de liquide neutrophage dans le canal d'injection par la différence de pression qui est aux bornes de ce canal d'injection. Chaque extrémité de celui-ci est reliée à une sphère sous pression. La pression de chaque sphère est réglée par une électrovanne de décharge et une électrovanne de remplissage.

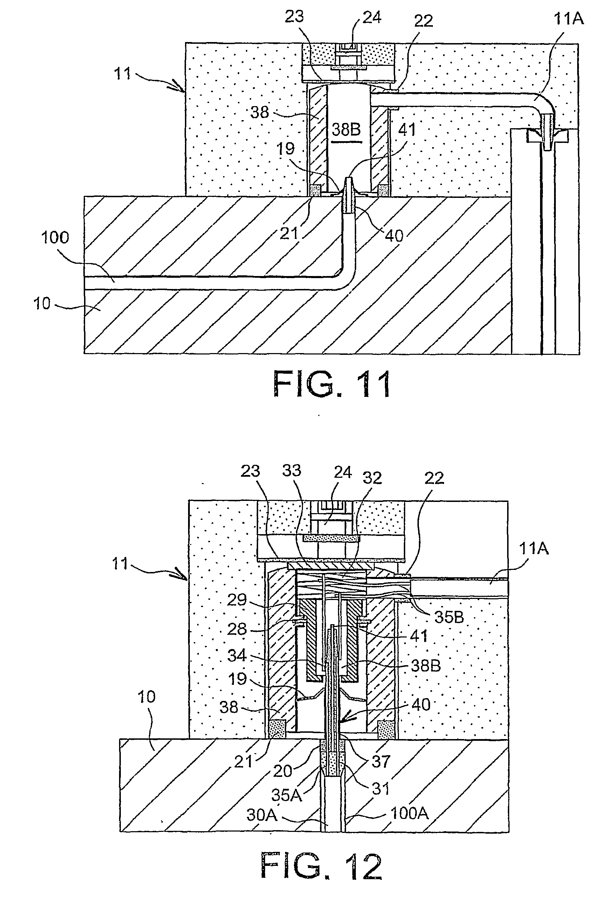

La figure 11 un détail de réalisation de la pièce mobile de connexion 11 concernant les liaisons du circuit pneumatique. On y retrouve une canalisation 100 traversant la pièce interne 10 et débouchant dans l'espace 38B de la cloche de connexion 38. A cet effet, on utilise des opercules 19 que traversent chacun un clapet à bille 40 muni d'une pointe 41. La cloche de connexion 38 est équipée d'un joint inférieur 21 et d'un joint latéral 22. Pour régler le positionnement de cette cloche de connexion 38 et son appui sur la haute pièce mobile de connexion 11, on utilise une vis 24 agissant sur une membrane souple d'étanchéité placée au-dessus de la cloche mobile de connexion 38.

Un exemple de connexion électrique, sous gaz pour être étanche à très haute pression, au niveau de cette pièce de connexion 11 est représenté à la figure 12, la coupe étant faite selon un autre diamètre de la pièce mobile de connexion 11.

On y retrouve la cloche mobile de connexion 38 et son espace 38B, les différents joints et accessoires qui lui permettent son maintien en place. Un câble 30A débouche d'une canalisation 100A de la pièce interne 10B. Le câble 30A peut très bien ne pas occuper toute cette canalisation 100A. En effet, d'autres moyens de transmission de signaux électriques ou optiques peuvent être utilisés. On remarque que le clapet à bille 40 comporte une canalisation centrale 37 permettant au gaz provenant de l'extérieur de la cuve de passer au travers d'une pièce isolante 31. Le clapet à bille 40 transperce par sa pointe 41 l'opercule 19, du gaz sous pression empêchant le fluide caloporteur du réacteur de remplir l'intérieur de la cloche mobile de connexion 38 et en particulier une pièce de raccord 34 placée dans une piston 29 monté coulissant à l'intérieur de la cloche mobile de connexion 38. Un joint 28 permettant d'assurer l'étanchéité à son niveau. A cet effet, un ressort 32 appuie sur un couvercle rapporté 33 pour appliquer un bon contact de liaison.

Ainsi différents conducteurs, par exemple 35A, du premier câble 30A peuvent être mis en contact avec des conducteurs 35B placés en aval, à l'intérieur de la pièce mobile de connexion 11. La souplesse du joint 28 au niveau du piston 29 permet le centrage du clapet à bille 40 dans la pièce de raccord 34.

Avec de tels montages, la connexion entre différents conducteurs électriques ou optiques, tels que des fibres optiques, peut s'effectuer sous gaz et hors fluide. En effet, le joint 28 du piston 29 permet à ce dernier un léger jeu permettant de centrer le clapet à bille 40 par l'intermédiaire d'une pièce de centrage 20.

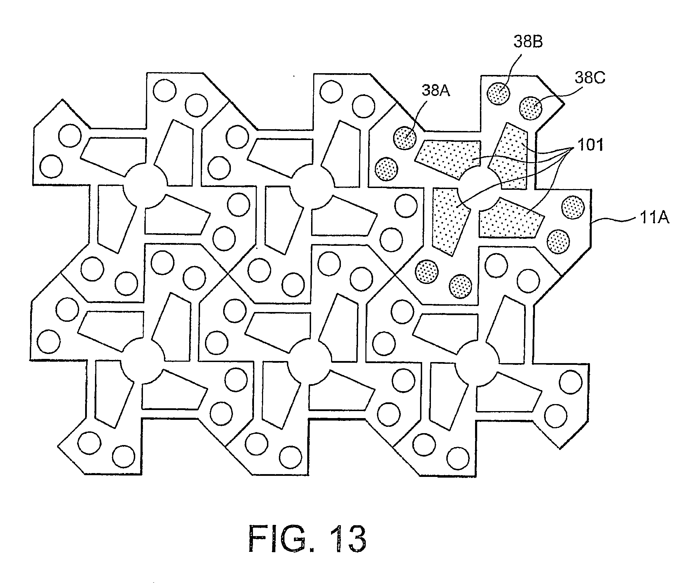

Comme le montre la figure 13, les pièces mobiles de connexion 11A peuvent présenter une forme complémentaire qui leur permet de s'imbriquer les unes dans les autres, ce qui les rend autobloquantes. De plus, les trous d'eau 101A peuvent être profilés pour engendrer une mise en rotation du fluide qui mélange et homogénéise la température de l'eau sortant des assemblages.

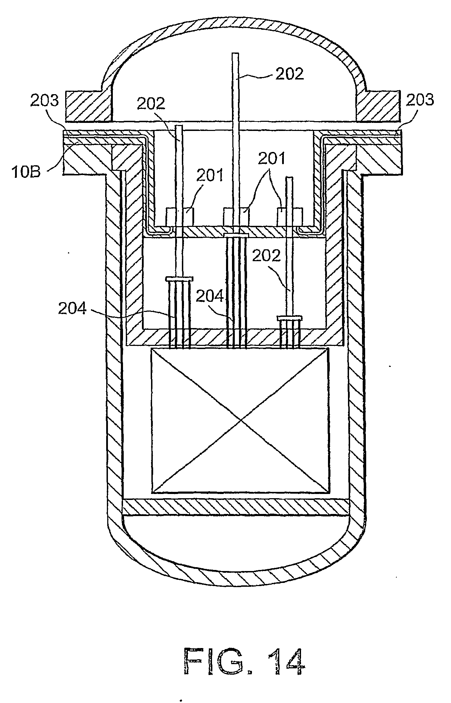

La figure 14 montre une variante dans laquelle des barres de commande sont utilisées. Des moyens de transmission 203, qui peuvent être des câbles électriques, mais aussi des tuyaux d'alimentation, passent par la ou les pièces internes 10c et mettent en relation avec l'extérieur de la cuve les moyens de déplacement moteur ou autres 201 mus à l'aide d'énergie pneumatique ou hydraulique ou électrique qui manoeuvrent des axes 202 solidaires des barres de commande. Dans ce cas, les moyens de déplacement moteurs 201 sont placés au-dessus de la pièce interne 10c.

Ce système bien que moins performant permet aussi de régler un réacteur nucléaire sans traversée du couvercle de cuve ou de la cuve elle même.

On note que dans toutes les variations du système selon l'invention, il est possible d'utiliser la pièce interne 10 ou son équivalent, c'est-à-dire les pièces 10I et 10S, pour y installer des tubes ou canalisations dont la fonction est d'alimenter à volonté des cloches de pression, ouvertes sur le fluide caloporteur du réacteur et situées dans ou entre les assemblages de combustible. Dans ce cas, la variation de la pression permet de faire varier le niveau du fluide caloporteur dans la cloche de pression autour des canaux d'injection.

Dans toutes les variantes selon l'invention, les pièces internes 10, 10S et 10I peuvent être également utilisées pour permettre le passage de n'importe quel conducteur dont la fonction est de transmettre des signaux émis par des moyens de mesure ou de visualisation, tels que des chambres à fission ou des détecteurs neutroniques, par exemple du type "collection" ou chambre à fission, pour mesurer le flux neutronique et déterminer une carte de flux, des thermocouples, des fibres optiques ou des caméras. Elles sont également utilisées pour ramener, à l'extérieur, des informations de capteurs de mesure ou de moyens de contrôle situés dans le réacteur. On utilise alors une connexion telle que représentée par la figure 12, ces câbles traversant la pièce isolante 31 et perçant l'opercule 19.

La ou les pièces internes 10, 10S ou 10I comprenant des éléments de transmission ne sont pas obligatoirement placées au-dessus du coeur. On peut envisager de les placer, par exemple, en dessous du coeur.

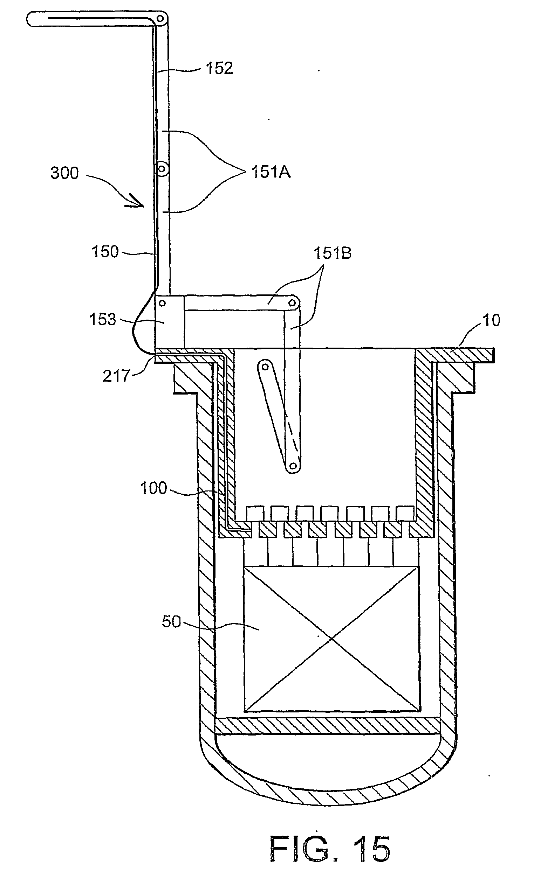

En référence à la figure 15, les canalisations 100 placées dans la ou les pièces internes 10 aboutissent, de façon latérale, à une sortie latérale 217. Ils peuvent être avantageusement prolongés par des câbles ou canalisations identiques 152 qui sont portés par un bras articulé 300. En effet, celui-ci peut être fixé à l'extrémité de la pièce interne 10 par une base 153. Chaque bras articulé possède plusieurs tronçons qui peuvent être déployés de manière à atteindre le rebord de la piscine 150 dans laquelle est installé le réacteur. Cette position déployée est illustrée par les tronçons 151A. Ainsi, tous les tubes nécessaires à la pressurisation de chacun des réservoirs contenant du liquide neutrophage peut être "sans connexion", du rebord de la piscine où se trouvent des dispositifs de commande jusqu'à l'intérieur de la pièce interne. Les connecteurs latéraux 17 de la réalisation représentée sur les figures 5A et 5B sont alors supprimés.

En d'autres termes, la canalisation 100 peut être, dans l'application préférée selon l'invention, un tube continu depuis l'intérieur de la pièce interne 10 du réacteur jusqu'au bout du bras 300 du réacteur. La connexion vers les autres appareils constitue le schéma de principe nécessaire au fonctionnement du réacteur.

Une autre possibilité consiste à relier par une soudure, un connecteur, ou autre, un tube ou un flexible à la sortie de la pièce interne supérieure 10S. De l'autre côté, ce même tube ou flexible peut être relié à un des tubes contenu dans les tronçons 151A du bras 300 et ce de façon identique (soudure, connexion ou autre). Mais, cette dernière méthode rajoute une connexion par tube, elle est donc moins fiable.

L'articulation du bras articulé permet à ce dernier d'être replié comme l'indique la position des tronçons 151B. En effet, ceux-ci se retrouvent à l'intérieur de la pièce interne 10. L'utilisation de cette position est prévue pour le cas du déchargement du combustible à l'intérieur du coeur 50 du réacteur nucléaire pour lequel il est nécessaire d'enlever la pièce interne 10. Cette dernière peut être ainsi déposée en dehors de la piscine avec un encombrement réduit, le bras articulé se trouvant à l'intérieur de celui-ci.

Ainsi, une fois dépliée, le bras articulé permet de reporter les points de connexion électriques, pneumatiques ou autres, en dehors de la piscine. L'articulation peut être obtenue en soudant des flexibles, qui peuvent être en acier inoxydable, aux articulations ou en utilisant la technique dite de "queue de cochon" ou "lyre de souplesse", c'est-à-dire une boucle sur un tuyau pour lui permettre de se déformer.

Ainsi, il est possible de déplier plus de 10 m de bras articulé (la hauteur d'eau de la piscine) au-dessus de la pièce interne.

Le ou les bras articulés peuvent être manoeuvrés à l'aide de moteurs électriques ou de vérins.

### Avantages de l'invention

L'invention supprime toutes les traversées du couvercle de la cuve et les traversées de fond de cuve ou de couvercle de cuve, qui sont indispensables dans un réacteur nucléaire classique, pour assurer toutes les fonctions de liaison, de mesure, de contrôle et de commande à l'intérieur du réacteur.

La ou les pièces internes décrites dans ce document peuvent être des pièces rapportées à la pièce interne initialement prévue dans la cuve.

De toute manière, les pièces internes du dispositif selon l'invention peuvent très bien assurer la fonction mécanique empêchant le coeur du réacteur et le combustible d'être soulevés par le flux de fluide caloporteur.

L'invention est applicable à tous les types de réacteur, qu'ils soient à eau pressurisée, à eau bouillante, à caloporteur gazeux, à métal fondu, ou même à eau lourde. Elle permet de supprimer l'usage des barres de commande à insérer entre les barres à combustible et tous les dispositifs de guidage de celles-ci se trouvant au-dessus du coeur et à l'extérieur de la cuve.

Elle permet de remplir ou vider les canaux à l'aide de plusieurs types de liquides neutrophages, tels que des métaux ou alliages métalliques, additionnés éventuellement de particules solides neutrophages de même densité que le métal ou l'alliage. Les liquides neutrophages restent liquides à toutes les températures de fonctionnement d'un réacteur nucléaire, y compris dans les conditions de températures accidentelles.

Le sous-ensemble du dispositif constitué, entre autres, de la tête d'assemblage, des réservoirs de liquide neutrophage et des canaux d'injection étant fourni en même temps que les assemblages de combustible, et en dessous de la température de fonctionnement du réacteur, les canaux d'injection sont remplis à l'aide du mélange neutrophage qui est alors solide. Ceci constitue un avantage considérable, notamment pendant toutes les phases de transport et de manipulation du combustible. Ceci donne au dispositif un niveau de sûreté supplémentaire.

Le fait de disposer le réservoir d'hélium à l'intérieur de la pièce interne supérieure permet que celui-ci soit stable en température et constitue un système passif entièrement dans le réacteur. En effet, en cas de rupture des tuyauteries externes à la cuve, l'injection de neutrophage se fait.

La cloche utilisée pour la variation spectrale peut faire varier le spectre neutronique, ce qui permet de régénérer le combustible. Lorsqu'elle est remplie par le fluide caloporteur, on obtient une modération accrue du flux qui permet de consommer le combustible du réacteur qui a été régénéré et de prolonger ainsi le cycle du combustible.

D'autres avantages sont relatifs au chargement du coeur du réacteur muni du dispositif de commande selon l'invention.

En effet, une fois le combustible mis à l'intérieur de la cuve du réacteur, on pose au-dessus de ce dernier la pièce interne 10A ou 10B ou l'ensemble équivalent. On place ensuite la pièce mobile de connexion 11, les connecteurs reliés à l'extérieur étant également reliés à une alimentation gazeuse sous pression, empêchant ainsi l'eau de passer. En effet, la pièce mobile de connexion 11 étant amovible et munie d'opercules 19, l'eau ne peut donc pas rentrer à l'intérieur de cette pièce mobile de connexion 11.

Le serrage de la pièce mobile de connexion 11 sur la pièce interne 10, 10S et éventuellement sur la partie supérieure 12S de la tête d'assemblage permet l'enfoncement et le perçage de la pointe 41 du clapet à bille 40 dans l'opercule 19.

Le serrage de la vis 14 permet d'obtenir l'étanchéité parfaite sur la pièce interne 10 ou 10S. On met en communication la cloche 38 avec les tubes et canalisations dans la pièce mobile de connexion 11. Ainsi, la liaison entre l'alimentation en gaz et les réservoirs de liquide neutrophage 4A et 4B et les canaux d'injection 7 est réalisée de façon sûre, sans avoir introduit d'eau dans le circuit. Une telle liaison est d'ailleurs contrôlable par la mesure des fuites de gaz identifiées dans le réacteur. En cas de mauvais serrage, l'opération peut être reprise, la pièce mobile de connexion 11 changée, sans qu'on ait à enlever des pièces internes servant au maintien du combustible et du coeur du réacteur. Ceci constitue un avantage de sûreté et de disponibilité vis-à-vis de l'entretien et la maintenance du réacteur nucléaire.

Il est possible d'intervenir sur un ou plusieurs dispositifs de commande, relatifs à un ou plusieurs assemblages de combustible.

D'autre part, l'invention permet quatre fonctions différentes de commande dans le fonctionnement des réacteurs, qui sont :
- l'arrêt d'urgence du réacteur avec une grande rapidité d'insertion du liquide neutrophage ;
- le contrôle de la puissance du réacteur en fonctionnement ;
- la correction des déformations du flux à l'intérieur du coeur;
- la modification du spectre neutronique à l'intérieur du coeur.

On note que l'arrêt d'urgence est du type passif.

L'invention permet également de dissocier le fluide caloporteur des matières qui sont employées à la maîtrise du réacteur. On s'affranchit ainsi de la gestion chimique du fluide caloporteur et des inconvénients de la présence d'acide borique dans les circuits caloporteur (corrosion).

Bien entendu, toute préparation sur la pièce mobile de connexion 11 est possible, assemblage par assemblage de combustible, sans qu'on ait à enlever les pièces servant au maintien en place du combustible, à savoir les pièces internes.

L'invention permet de multiplier les nombres de dispositifs de commande, sans nécessiter un grand nombre de traversées de la paroi de l'enceinte du réacteur ou des pièces internes. Cette multiplicité d'éléments de commande permet de réduire la dissymétrie du flux neutronique dans un réacteur en fonctionnement.

L'utilisation du diaphragme 6 sur le circuit pneumatique permet de supprimer l'utilisation de deux circuits, en créant une pression différentielle entre les deux branches du tube 7.

L'utilisation d'un ou de plusieurs bras articulés peut permettre de reporter le point de connexion de l'ensemble des canalisations reliant le coeur du réacteur à l'extérieur de la piscine.

## Revendications

1. Réacteur nucléaire comprenant :
- une cuve (1);
- un coeur (50), placé dans la cuve (1) et contenant des assemblages de crayons de combustible (2) ;
- au moins une pièce interne (10, 10S, 10I) placée à l'intérieur de la cuve (1) et au dessus du coeur (50), et apte maintenir en place ce dernier ;
- des moyens d'insertion de liquide neutrophage à l'intérieur des assemblages de crayons de combustible (2) ;
**caractérisé en ce que**
la au moins une pièce interne (10, 10S, 10I) débouche à l'extérieur de la cuve (1) pour réaliser une liaison entre l'intérieur et l'extérieur de la cuve, reliant ainsi des dispositifs de commande externes avec les moyens d'insertion de liquide neutrophage placés à l'intérieur de la cuve, et **en ce que**
les moyens d'insertion de liquide neutrophage comprennent des moyens de transmission placés en partie dans des canalisations (100) prévues dans la au moins une pièce interne et étant reliées aux moyens d'insertion de liquide neutrophage.

2. Réacteur nucléaire selon la revendication 1, **caractérisé en ce que** la au moins une pièce interne débouche latéralement à l'extérieur de la cuve (1).

3. Réacteur nucléaire selon la revendication 1 ou 2, **caractérisé en ce qu'**il comprend au moins un bras de connexion (300) relié à une sortie latérale de connexion (17) de la au moins une pièce interne (10, 10S) et avec les dispositifs de commande externe, le bras de connexion (300) étant articulé pour pouvoir adopter deux positions :
- une position dépliée (151A) de connexion, dans laquelle une première extrémité du bras de connexion (300) se trouve en dehors d'une piscine dans laquelle est installé le réacteur, et
- une position repliée (151B), dans laquelle le bras de connexion (300) se trouve replié à l'intérieur de la au moins une pièce interne (10, 10S), des éléments de transmission se trouvant à l'intérieur du bras de connexion (300).

4. Réacteur nucléaire selon la revendication 1, 2 ou 3, **caractérisé en ce que** les moyens d'insertion sont constitués par des moyens d'injection de liquide neutrophage dans des canaux d'injection (7) placés à l'intérieur des assemblages de crayons de combustible.

5. Réacteur nucléaire selon la revendication 1, **caractérisé en ce que** les moyens de transmission comprennent, entre autres, un réservoir d'hélium (5) placé dans la au moins une pièce interne (10, 10S).

6. Réacteur nucléaire selon la revendication 1, **caractérisé en ce que** la au moins une pièce interne est constituée de deux pièces internes, une pièce interne supérieure (10S) débouchant à l'extérieur et une pièce interne inférieure (10I) placée sous la pièce interne supérieure (10S), à l'intérieur de la cuve (1).

7. Réacteur nucléaire selon la revendication 1, **caractérisé en ce que** la au moins une pièce interne est constituée d'une seule pièce interne (10).

8. Réacteur nucléaire selon la revendication 4, **caractérisé en ce que** les moyens d'injection de liquide neutrophage comprennent, pour chaque assemblage de crayons de combustible, au moins un réservoir (4A, 4B) de liquide neutrophage placé dans ou au-dessous de la au moins une pièce interne (10, 10S, 10I).

9. Réacteur nucléaire selon la revendication 8, **caractérisé en ce qu'**il comprend une tête d'assemblage (12, 12S, 12I) permettant la liaison entre la pièce interne (10) et les canaux d'injection du liquide neutrophage situés dans les assemblages de crayons de combustible (2), placée en dessous de la pièce interne, une partie supérieure (12S) pénétrant ou traversant éventuellement la pièce interne.

10. Réacteur nucléaire selon la revendication 9, **caractérisé en ce que** les canaux d'injection (7) sont reliés aux réservoirs (4A, 4B) au moyen de canalisations de liquide neutrophage (121) prolongées chacune d'un col de cygne (39).

11. Réacteur nucléaire selon la revendication 9, **caractérisé en ce qu'**il comprend, pour chaque assemblage de crayon de combustible, une pièce mobile de connexion (11, 11A) placée au-dessus de la au moins une pièce interne (10, 10S) pour réaliser des connexions entre les canalisations (100) placées dans la pièce interne et les moyens d'injection du liquide neutrophage, cette pièce mobile de connexion comportant un espace (38B) débouchant au-dessus des canalisations de la pièce interne (10, 10S) et comprenant également des canalisations mettant en liaison les canalisations (100) de la pièce interne (10, 10S) avec les réservoirs de liquide neutrophage (4A, 4B) des moyens d'injection commandés par des moyens de commande placés à l'extérieur de la cuve (1).

12. Réacteur nucléaire selon la revendication 11, **caractérisé en ce que**, pour chaque assemblage de crayon de combustible, une cloche mobile (38) est placée dans l'espace (38B) de la pièce mobile de connexion (11), au-dessus de l'endroit où débouchent les canalisations (100) de la pièce interne (10, 10S) et étant complétée de joints d'étanchéité (21, 22).

13. Réacteur nucléaire selon la revendication 12, **caractérisé en ce qu'**il comprend, pour chaque assemblage de crayon de combustible, entre autres, un circuit de distribution pneumatique, la pièce mobile de connexion (11) étant alors complétée d'opercules (19), entre autres, à la base des cloches mobiles (38), pour réaliser l'étanchéité, avant serrage de la pièce mobile (11) sur la pièce interne, de la connexion entre les différentes canalisations (100) de la pièce interne (10, 10S), les canalisations (11A) de la pièce mobile de connexion (11) et celles de la tête d'assemblage.

14. Réacteur nucléaire selon la revendication 11, **caractérisé en ce qu'**il comprend, pour chaque assemblage de crayon de combustible, un circuit de distribution électrique, la pièce mobile de connexion (11) étant complétée d'opercules (19) à la base de la cloche mobile (38) dans laquelle est placée une pièce de raccord (34) montée mobile de façon étanche grâce à un joint (28) et pouvant recevoir un clapet à bille (40) terminant un câble (30A) aboutissant de la pièce interne (10, 10S) dans l'espace (38) de la pièce mobile de connexion (11).

15. Réacteur nucléaire selon la revendication 4, **caractérisé en ce que**, pour chaque assemblage de crayon combustible, des conduits d'injection et de distribution (120) du liquide neutrophage entre les réservoirs et les canaux d'injection (7) sont placés dans une tête d'assemblage (12) sur plusieurs étages (13, 13S) respectifs, en fonction du type d'injection.

16. Réacteur nucléaire selon la revendication 4, **caractérisé en ce qu'**une partie des canaux d'injection (7) sont constitués chacun d'un tube externe (80, 90, 900, 902), à l'intérieur duquel sont placés au moins un tube capillaire (82, 92).

17. Réacteur nucléaire selon la revendication 16, **caractérisé en ce que** le tube externe (900, 902) a une section variable sur la hauteur de celui-ci.

18. Réacteur nucléaire selon la revendication 17, **caractérisé en ce que** la section variable se trouve dans la partie supérieure du tube externe (900, 902).

19. Réacteur nucléaire selon la revendication 13, **caractérisé en ce qu'**une partie des canaux d'injection (7) comprennent une cloche (18) à l'intérieur duquel sont placés le tube externe (80, 90) et le au moins un tube capillaire (82, 92).

20. Réacteur nucléaire selon la revendication 16, **caractérisé en ce que** les canaux d'injection (7) sont montés en parallèle.

21. Réacteur nucléaire selon la revendication 1, **caractérisé en ce qu'**il comprend des pistons manoeuvrant des barres de commande rigide entre les crayons de combustible et commandés par l'intermédiaire des canalisations de la au moins une pièce interne.

22. Réacteur nucléaire selon la revendication 1, **caractérisé en ce qu'**il comprend des dispositifs électriques et/ou électromagnétiques pour manoeuvrer des barres de commande entre les crayons de combustible et commandés par l'intermédiaire des canalisations de la au moins une pièce interne.

23. Réacteur selon la revendication 11, **caractérisé en ce que** les pièces mobiles de connexion (11A) ont des formes complémentaires de façon à s'autobloquer.

24. Réacteur selon la revendication 11, **caractérisé en ce que** les pièces mobiles de connexion (11A) ont des trous d'eau (101A) ayant un profil en partie hélicoïdal.

## Claims

1. A nuclear reactor comprising:
- a vessel (1) ;
- a core (50) placed in the vessel (1) and containing assemblies of fuel rods (2),
- at least one internal part (10, 10S, 10I) placed inside the vessel (1) and above the core (50), and intended to maintain in place the latter,
- means for inserting a liquid neutron absorber inside the assemblies of fuel rods (2),
**characterized:**
- **in that** the at least one internal part (10, 10S, 10I) emerges on the outside of the vessel (1) to provide a connection between the inside and the outside of the vessel, thereby connecting external control devices with the means for inserting a liquid neutron absorber, placed inside the vessel,
- and **in that** the means for inserting a liquid neutron absorber comprise transmission components partly placed in conduits (100) provided in the at least one internal part and being connected to means for inserting a liquid neutron absorber.

2. The nuclear reactor according to claim 1, wherein the at least one internal part emerges on the outside of the vessel (1) laterally.

3. The nuclear reactor according to one of claims 1 and 2, wherein it further comprises at least one connection arm (300) connected to a side connection outlet (17) of the at least one internal part (10, 10S) and with the external control devices, the connection arm (300) being jointed to be able to assume two positions of:
- a stretched-out connection position (151A), in which a first end of the connection arm (300) is outside of a pool in which lies the core,
- and a folded position (151B), in which the connection arm (300) is folded inside the at least one internal part (10, 10S), transmission components being inside the connection arm (300).

4. The nuclear reactor according to one of claims 1 to 3, wherein the insertion means are formed by means for injecting a liquid neutron absorber into the injection channels (7) placed inside the fuel rod assemblies.

5. The nuclear reactor according to claim 1, wherein the transmission means comprises a helium tank (5), placed in the at least one internal part (10, 10S).

6. The nuclear reactor according to claim 1, wherein the at least one internal part includes two internal parts, an upper internal part (10S) emerging on the outside and a lower internal part (10I) placed under the upper internal part (10S), inside the vessel (1).

7. The nuclear reactor according to claim 1, wherein the at least one internal part comprises a single internal part (10).

8. The nuclear reactor according to claim 4, wherein the means for injecting a liquid neutron absorber comprises, for each fuel rod assembly, at least one tank (4A, 4B) of liquid neutron absorber placed in or above the at least one internal part (10, 10S, 10I).

9. The nuclear reactor according to claim 8, wherein it comprises an assembly head (12, 12S, 12I) providing connection between the internal part (10) and the channels for injecting the liquid neutron absorber located in the fuel rod assemblies (2), placed below the internal part, an upper portion (12S) optionally penetrating or passing through the internal part.

10. The nuclear reactor according to claim 9, wherein a junction of the tanks (4A, 4B) with the injection channels (7) is achieved by liquid neutron absorber conduits (121) each extended by a swan-neck (39).

11. The nuclear reactor according to claim 9, wherein it comprises, for each assembly of fuel rods, a mobile connection part (11, 11A) placed above the at least one internal part (10, 10S) to provide connections between the conduits (100) placed in the internal part and means for injecting a liquid neutron absorber, the mobile connection part including a space (38B) emerging above the conduits of the internal part (10, 10S) and further comprising conduits connecting the conduits (100) of the internal part (10, 10S) with the liquid neutron absorber tanks (4A, 4B) of the injection means controlled by control means placed outside the vessel (1).

12. The nuclear reactor according to claim 11, wherein for each fuel rod assembly, a mobile bell (38) is placed in the space (38B) of the mobile connection part (11), above the location where conduits (100) of the internal part (10, 10S) emerge, and being completed with seals (21, 22).

13. The nuclear reactor according to claim 12, wherein it comprises, for each fuel rod assembly, among others, a pneumatic distribution circuit, the mobile connection part (11) being then completed with lids (19) at a base of the mobile bells (38) to provide the seal, before tightening the mobile part (11) on internal part, of the connection between the different conduits (100) of the internal part (10, 10S), the conduits (11A) of the mobile connection part (11) and those of the assembly head.

14. The nuclear reactor according to claim 11, wherein it comprises, for each fuel rod assembly, an electrical distribution circuit, the mobile connection part (11) being completed with lids (19) at the base of the mobile bell (38), in which is placed a mobile connecting part (34) sealably mounted by a joint (28), and configured to receive a ball valve (40) terminating a cable (30A) of the internal part ending in the space (38) of the mobile connection part (11).

15. The nuclear reactor according to claim 4, wherein, for each fuel rod assembly, ducts for injecting and distributing (120) the liquid neutron absorber between the tanks and the injection channels (7) are placed in an assembly head (12) on plural respective stages (13, 135) depending on the type of injection.

16. The nuclear reactor according to claim 4, wherein portions of the injection channels (7) each include an external tube (80, 90, 900, 902), inside which at least one capillary tube (82, 92) is placed.

17. The nuclear reactor according to claim 16, wherein the external tube (900, 902) has a variable section over the height of the latter.

18. The nuclear reactor according to claim 17, wherein the variable section (900, 902) is found in the upper portion of the external tube.

19. The nuclear reactor according to claim 13, wherein a portion of the injection channels (7) comprise a bell (18) inside which the external tube (80, 90) and the at least one capillary tube (82, 92) are placed.

20. The nuclear reactor according to claim 16, wherein the injection channels (7) are mounted in parallel.

21. The nuclear reactor according to claim 1, wherein it comprises pistons manoeuvring control rods between the fuel rods and controlled via conduits of the at least one internal part.

22. The nuclear reactor according to claim 1, wherein it comprises electrical and/or electromagnetic devices for manoeuvring control rods between the fuel rods and controlled via conduits of the at least one internal part.

23. The nuclear reactor according to claim 11, wherein the mobile connection parts (11A) have complementary shapes to self-lock.

24. The nuclear reactor according to claim 11, wherein the mobile connection parts (11A) have water holes (101A) with a partly helical profile.

## Patentansprüche

1. Kernreaktor, Folgendes aufweisend:
- einen Behälter (1);
- einen Kern (50), der in dem Behälter (1) angeordnet ist und Verbünde von Brennstäben (2) enthält;
- mindestens ein inneres Teil (10, 10S, 10I), das im Inneren des Behälters (1) und oberhalb des Kerns (50) angeordnet ist und sich dazu eignet, diesen an der Stelle zu hatten;
- Einrichtungen zum Einbringen von Neutronen absorbierender Flüssigkeit in das Innere der Verbünde von Brennstäben (2);
**dadurch gekennzeichnet, dass**
das mindestens eine innere Teil (10, 10S, 10I) außen an dem Behälter (1) mündet, um eine Verbindung zwischen dem Inneren und dem Äußeren des Behälter herzustellen, die somit externe Steuervorrichtungen mit den im Inneren des Behälters angeordneten Einrichtungen zum Einbringen von Neutronen absorbierender Flüssigkeit verbindet, und dass
die Einrichtungen zum Einbringen von Neutronen absorbierender Flüssigkeit Übertragungseinrichtungen umfassen, die zum Teil in Rohrleitungen (100) angeordnet sind, die in dem mindestens einen inneren Teil vorgesehen und mit den Einrichtungen zum Einbringen von Neutronen absorbierender Flüssigkeit verbunden sind.

2. Kernreaktor nach Anspruch 1, **dadurch gekennzeichnet, dass** das mindestens eine innere Teil seitlich außen am Behälter (1) mündet.

3. Kernreaktor nach Anspruch 1 oder 2, **dadurch gekennzeichnet, dass** er mindestens einen Verbindungsarm (300) umfasst, der mit einem seitlichen Verbindungsausgang (17) des mindestens einen inneren Teils (10, 10S) und mit den externen Steuervorrichtungen verbunden ist, wobei der Verbindungsarm (300) angelenkt ist, um zwei Positionen einnehmen zu können:
- eine auseinander geklappte Verbindungsposition (151A), in der sich ein erstes Ende des Verbindungsarms (300) außerhalb eines Beckens befindet, in dem der Reaktor installiert ist, und
- eine zusammengeklappte Position (151B), in der sich der Verbindungsarm (300) im Inneren des mindestens einen inneren Teils (10, 10S) zusammengeklappt befindet, wobei sich Übertragungselemente im Inneren des Verbindungsarms (300) befinden.

4. Kernreaktor nach Anspruch 1, 2 oder 3, **dadurch gekennzeichnet, dass** die Einrichtungen zum Einbringen aus Einrichtungen zum Einspritzen von Neutronen absorbierender Flüssigkeit in Einspritzkanäle (7) bestehen, die im Inneren der Verbünde von Brennstäben angeordnet sind.

5. Kernreaktor nach Anspruch 1, **dadurch gekennzeichnet, dass** die Übertragungseinrichtungen unter anderem einen Heliumbehälter (5) umfassen, der in dem mindestens einen inneren Teil (10, 10S) angeordnet ist.

6. Kernreaktor nach Anspruch 1, **dadurch gekennzeichnet, dass** das mindestens eine innere Teil aus zwei inneren Teilen besteht, einem oberen inneren Teil (10S), das nach außen mündet, und einem unteren inneren Teil (10I), das unter dem oberen inneren Teil (10S) im Inneren des Behälters (1) angeordnet ist.

7. Kernreaktor nach Anspruch 1, **dadurch gekennzeichnet, dass** das mindestens eine innere Teil aus einem einzigen inneren Teil (10) gebildet ist.

8. Kernreaktor nach Anspruch 4, **dadurch gekennzeichnet, dass** die Einrichtungen zum Einspritzen von Neutronen absorbierender Flüssigkeit für jeden Verbund von Brennstäben mindestens ein Reservoir (4A, 4B) für Neutronen absorbierende Flüssigkeit umfassen, der in dem mindestens einen inneren Teil oder unterhalb des mindestens einen inneren Teils (10, 10S, 10I) angeordnet ist.

9. Kernreaktor nach Anspruch 8, **dadurch gekennzeichnet, dass** er einen Verbindungskopf (12, 12S, 12I) umfasst, der die Verbindung zwischen dem inneren Teil (10) und den in den Verbünden von Brennstäben (2) befindlichen Einspritzkanälen für die Neutronen absorbierende Flüssigkeit ermöglicht, und der unterhalb des inneren Teils angeordnet ist, wobei ein oberer Abschnitt (12S) gegebenenfalls das innere Teil penetriert oder durchquert.

10. Kernreaktor nach Anspruch 9, **dadurch gekennzeichnet, dass** die Einspritzkanäle (7) mit den Reservoiren (4A, 4B) mittels Rohrleitungen (121) für die Neutronen absorbierende Flüssigkeit verbunden sind, die sich jeweils in einem Schwanenhals (39) fortsetzen.

11. Kernreaktor nach Anspruch 9, **dadurch gekennzeichnet, dass** er für jeden Verbund von Brennstäben ein bewegliches Verbindungsteil (11, 11A) umfasst, das oberhalb des mindestens einen inneren Teils (10, 10S) angeordnet ist, um Verbindungen zwischen den in dem inneren Teil angeordneten Rohrleitungen (100) und den Einspritzeinrichtungen für die Neutronen absorbierende Flüssigkeit herzustellen, wobei dieses bewegliche Verbindungsteil einen Raum (38B) umfasst, der oberhalb der Rohrleitungen des inneren Teils (10, 10S) mündet und ebenfalls Rohrleitungen umfasst, welche die Rohrleitungen (100) des inneren Teils (10, 10S) mit den Reservoiren (4A, 4B) für Neutronen absorbierende Flüssigkeit der Einspritzeinrichtungen in Verbindung setzen, die durch außerhalb des Behälters (1) angeordnete Steuereinrichtungen gesteuert werden.

12. Kernreaktor nach Anspruch 11, **dadurch gekennzeichnet, dass** für jeden Verbund von Brennstäben eine bewegliche Glocke (38) in dem Raum (38B) des beweglichen Verbindungsteils (11) oberhalb der Stelle angeordnet ist, an der die Rohrleitungen (100) des inneren Teils (10, 10S) münden, und die um Dichtungen (21, 22) ergänzt ist.

13. Kernreaktor nach Anspruch 12, **dadurch gekennzeichnet, dass** er für jeden Verbund von Brennstäben unter anderem einen pneumatischen Verteilerkreis umfasst, wobei das bewegliche Verbindungsteil (11) dann unter anderem um Verschlussorgane (19) an der Basis der beweglichen Glocken (38) ergänzt ist, um vor dem Festsetzen des beweglichen Teils (11) am inneren Teil die Dichtigkeit der Verbindung zwischen den verschiedenen Rohrleitungen (100) des inneren Teils (10, 10S), den Rohrleitungen (11A) des beweglichen Verbindungsteils (11) und denjenigen des Verbindungskopfs herzustellen.

14. Kernreaktor nach Anspruch 11, **dadurch gekennzeichnet, dass** er für jeden Verbund von Brennstäben einen elektrischen Verteilerkreis umfasst, wobei jedes bewegliche Verbindungsteil (11) um Verschlussorgane (19) an der Basis der beweglichen Glocke (38) ergänzt ist, in der ein Anschlussstück (34) angeordnet ist, das dank einer Dichtung (28) dicht und beweglich angebracht ist und ein Kugelventil (40) aufnehmen kann, das ein Kabel (30A) abschließt, das vom inneren Teil (10, 10S) in den Raum (38) des beweglichen Verbindungsteils (11) führt.

15. Kernreaktor nach Anspruch 4, **dadurch gekennzeichnet, dass** für jeden Verbund von Brennstäben Einspritz- und Verteilungsleitungen (120) für die Neutronen absorbierende Flüssigkeit zwischen den Reservoiren und den Einspritzkanälen (7) jeweils in Abhängigkeit von der Einspritzart auf mehreren Stufen (13, 13S) in einem Verbindungskopf (12) angeordnet sind.

16. Kernreaktor nach Anspruch 4, **dadurch gekennzeichnet, dass** ein Teil der Einspritzkanäle (7) jeweils aus einem Außenrohr (80, 90, 900, 902) gebildet ist, in dessen Innerem mindesten ein Kapillarrohr (82, 92) angeordnet ist.

17. Kernreaktor nach Anspruch 16, **dadurch gekennzeichnet, dass** das Außenrohr (900, 902) über seine Höhe einen variablen Querschnitt hat.

18. Kernreaktor nach Anspruch 17, **dadurch gekennzeichnet, dass** sich der variable Querschnitt im oberen Teil des Außenrohrs (900, 902) befindet.

19. Kernreaktor nach Anspruch 13, **dadurch gekennzeichnet, dass** ein Teil der Einspritzkanäle (7) eine Glocke (18) umfasst, in deren Innerem das Außenrohr (80, 90) und das mindestens eine Kapillarrohr (82, 92) angeordnet sind.

20. Kernreaktor nach Anspruch 16, **dadurch gekennzeichnet, dass** die Einspritzkanäle (7) parallel eingebaut sind.

21. Kernreaktor nach Anspruch 1, **dadurch gekennzeichnet, dass** er Kolben umfasst, die starre Steuerstäbe zwischen den Brennstäben betätigen und über die Rohrleitungen des mindestens einen inneren Teils gesteuert werden.

22. Kernreaktor nach Anspruch 1, **dadurch gekennzeichnet, dass** er elektrische und/oder elektromagnetische Vorrichtungen umfasst, um Steuerstäbe zwischen den Brennstäben zu betätigen, die über die Rohrleitungen des mindestens einen inneren Teils gesteuert werden.

23. Kernreaktor nach Anspruch 11, **dadurch gekennzeichnet, dass** die beweglichen Verbindungsteile (11A) komplementäre Formen haben, um sich selbst zu sperren.

24. Kernreaktor nach Anspruch 11, **dadurch gekennzeichnet, dass** die beweglichen Verbindungsteile (11A) Wasseröffnungen (101A) mit einem zum Teil schraubenförmigen Profil haben.
